# EUROPEAN PATENT APPLICATION

(11) **EP 1 467 336 A2**
(43) Date of publication of application: **13.10.2004**
(21) Application number: 04252088.2
(22) Date of filing: 07.04.2004
(51) Int. Cl.: G09F 13/18, G02B 6/00, G09F 15/00

(54) **Display**

(30) Priority: 09.04.2003 GB 0308210; 10.06.2003 GB 0313354
(71) Applicant: POWERGRAPHIC DISPLAYS LIMITED, High Wycombe Buckinghamshire HP12 3RS (GB)
(72) Inventor: Butler, Edward, Penn, Buckinghamshire HP10 8PG (GB)
(74) Representative: Howe, Steven

(57) **Abstract**

An illuminated display apparatus is provided having a light distribution panel (10) mounted within a frame, the frame comprising a first and a second housing (34) on opposed ends of the frame joined by a first and a second frame member (32) on opposed sides of the frame, a light source (16) arranged to illuminate an edge of the light distribution panel (10) and a transparent cover sheet (12) arranged to be positioned over one face of the light distribution panel (10) to sandwich a graphic sheet (14) between the light distribution panel (10) and the transparent cover sheet (12). The first and second frame members (32) each include lugs (62) arranged to extend over the edges of the transparent cover sheet (12) to clamp this to the light distribution panel (10). The resulting panel is very thin, and in particular can have a thickness of less than 40mm and preferably less than 20mm.

## Description

The present invention relates to an illuminated display apparatus, such as a light box, and in particular to a display apparatus for illuminating one or two graphic sheets or posters from behind.

For displaying graphics, such as posters, it is often desirable to illuminate the graphics to enhance their visibility. The graphics may be illuminated from the front, in which case light shines onto and is reflected from the front of the graphics. Alternatively, the graphics may be illuminated from behind, in which case the light is shone through the graphics from behind. In many cases, illumination from behind is preferred.

Display apparatus in the form of a light box is known comprising a central light distributing sheet that is illuminated from one or more sides, with light emitted from the front and rear faces of the sheet. The poster or graphic is located on one or each of the front and rear faces of the sheet and is held in place with a sheet of transparent material. Such light boxes may be fixed to a wall, or may be supported on rods or from wires attached to the side of the frame of the light box. The housing of the light box includes the necessary light source, and the associated power supply components.

Such light boxes are typically thick. Conventionally, the thinnest known light box of this general type has a thickness of around 40mm. For aesthetic considerations, and also to allow easier mounting of the light box, it is advantageous for the light box to be as thin as possible.

A further problem with known display apparatus in the form of light boxes when used as a double sided display is that of colour bleed. In this, the colour from one of the graphics on one side of the central light distributing member can be seen through the graphic on the opposite side, thereby causing colour errors in the viewed graphic.

According to a first aspect of the present invention an illuminated display apparatus comprises:
a light distribution panel mounted within a frame, the frame comprising a first and a second housing on opposed ends of the frame joined by a first and a second frame member on opposed sides of the frame;
a light source arranged to illuminate an edge of the light distribution panel; and
a transparent cover sheet arranged to be positioned over one face of the light distribution panel to sandwich a graphic sheet between the light distribution panel and the transparent cover sheet, in which
the first and second frame member each include lugs arranged to extend over the edges of the transparent cover sheet to clamp this to the light distribution panel.

It will be appreciated that the display may be orientated in any way desired, and therefore the terms "end" and "side" of the frame are used interchangeably throughout this specification.

The illuminating display apparatus according to the present invention may be made much thinner than known devices, preferably having a thickness of less than 40mm, and more preferably of about 20mm. This is possible by the combination of features of the invention, in particular the provision of lugs on the first and second frame members.

It is preferred that the first and/or second housings support the light source and power supply components associated with the light source. In a preferred example, separate light sources are associated with each of the first and second housings, allowing the light distribution panel to be illuminated from either or both ends.

In one example, the light source may comprise one or more strip light tubes, such as fluorescent light tubes. These have the advantage of being thin, and providing relatively uniform light along their length. In another example, the light source may comprise light emitting diodes. In this case, an array of light emitting diodes are preferably provided along one or both ends of the apparatus. Other light sources may be used. Advantageously, a diffuser or other means is provided to diffuse light from the light source to give uniform illumination. This is especially useful where an array of discrete light sources, such as light emitting diodes, are used.

The light source may emit light of a desired colour. Generally, the light source will emit white light, but it may emit light of other colours. In a preferred example, the light from the light source may change colour to create a display which changes colour. This may be achieved using LEDs that change colour over time.

Advantageously, two transparent cover sheets are provided, one on either side of the light distribution panel. This allows two graphic sheets to be provided, one on either side of the light distribution panel, each held between the light distribution panel and the associated transparent cover sheet. In this case, the lugs of the frame members can clamp both cover sheets to the light distribution panel.

According to a second aspect of the present invention a frame member for use in an illuminating display apparatus according to the first aspect of the present invention is provided, the frame member including an elongate tubular body and a pair of elongate lugs extending from the tubular body, the lugs being arranged to receive and clamp the light distribution panel and the at least one cover sheet.

The frame member according to the second aspect of the present invention has been found to be particularly useful in allowing the display apparatus of the first aspect of the invention to be formed with a small overall thickness.

The frame member is advantageously formed from metal, for example from aluminium, giving good strength with low weight. The frame member may be formed by extrusion.

The tubular body preferably has an internal diameter of a size to receive cables from one end of the frame to the other. The internal diameter is preferably at least 8mm, and is more preferably at least 9mm. The outer diameter of the tubular body is dependent upon the overall thickness of the display apparatus, and is preferably at least 10mm and more preferably at least 12mm. It is preferred that the outer diameter is no greater than 15mm, and more preferably no more than 14mm.

The elongate lugs preferably have a concave shape, arranged to curve towards the panels of the display apparatus. The provision of curved lugs helps provide the required resilience of the lugs to clamp the panels of the display apparatus. Alternatively or additionally, the curving of the lugs provides a greater area of engagement between the lugs and the transparent sheets of the illumination device to hold the members in place. The lugs preferably have a radius of curvature of at least 11mm, and more preferably of around 11.5 mm.

The lugs advantageously have a length extending beyond the tubular body in a direction generally normal to the axis of the tubular body by a distance sufficient to engage the edge of the transparent cover sheet by a short distance. The lugs preferably have a length of at least 9mm and preferably at least 11mm. Advantageously, the lugs should be no longer than 20mm, and most preferably no more than 15mm.

A preferred example of the illumination device of the first aspect of the present invention includes two frame members according to the second aspect of the present invention.

In this example, it is preferred that cables are provided between the first and second housings through the tubular portion of the frame members.

The two frame members are connected to the first and second housings to form the frame of the display apparatus. In a preferred example, corner plates are provided for connecting the housings and frame members.

According to a third aspect of the present invention an illuminated display apparatus includes a light distribution panel, a light source arranged to illuminate an edge of the light distribution panel, and a graphic sheet provided on each side of the light distribution panel, and in which an opalised sheets of material is provided between the light distribution panel and at least one of the graphic sheets.

The provision of an opalised sheet, such as paper or a sheet of opal acrylic, helps prevent colour bleed from one of the graphic sheets being seen when viewing the other graphic sheet. Advantageously, two opalised sheets are provided, one between each graphic sheet and the light distribution panel. This helps avoid colour bleed when viewing either graphic sheet.

The provision of an opalised sheet may be of advantage for any illuminated display apparatus, but is particularly useful for the illuminated display apparatus according to the first aspect of the present invention.

The present invention will be described, by way of example, with reference to the accompanying drawings, in which
Figure 1 shows an exploded cross-sectional view of a lighting apparatus;
Figure 2 shows a front view of a lighting apparatus;
Figure 3 shows a view of a corner piece and light distribution panel;
Figures 4a and 4b show a cross-section of a housing;
Figures 5a and 5b show a cross-section of a side frame member; and,
Figure 6 shows a cross-section through an alternative display apparatus.

The following description relates to a double sided light box, in which graphic sheets or posters are provided on either side of the central light distributing panel, allowing the graphics to be viewed from either side of the light box. However, the light box may be used as single sided light box, with a graphic sheet provided on only one side of the central light distributing panel. In this case, a reflective member may be provided on the opposite side of the light distributing panel to the graphic sheet, thereby reflecting any light emitted from the light distributing panel.

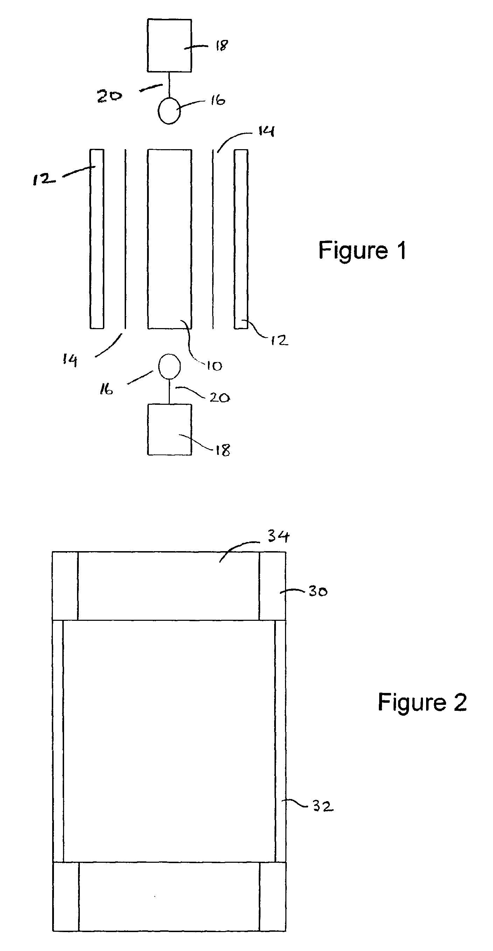

As shown in the cross sectional view of Figure 1, the light box of the present invention includes a central light distribution member 10 formed of a highly transparent acrylic sheet suitable for edge lighting applications, such as commercially available. Transparent cover sheets 12 are mountable on either side of the central light distributing member 10, and each sandwich a graphic sheet 14 between the central light distributing member 10 and the respective transparent cover sheet 12.

Fluorescent 840 T2 light tubes 16 are provided at either side, typically the top and bottom, of the central light distribution member 10. The light tubes 16 are powered by a suitable electronic ballast 18 through cables 20. Separate ballasts 18 are provided for each of the lamps 16, although a single ballast 18 may be shared between the two tubes 16. Light is emitted from the light tubes 16 onto the edge of the central light distributing member 10, and the light is emitted through the front and rear faces of the light distributing member 10. The light passes through the graphics 14 and the cover sheets 12, allowing the graphic to be viewed.

The ballast 18 and light tubes 16 are typically arranged to operate using mains voltage, for example 240V. To allow the lighting to operate from a low voltage, for example a 12V supply as may be commonly available, a transformer may be provided. The transformer should be a slim transformer to minimise the thickness of the lighting apparatus. Commercially available transformers having a thickness of around 22mm are suitable.

Although Figure 1 shows an arrangement including two light tubes 16, and associated power supplies 18, a single tube 16 and associated power supply 18 may be sufficient. In this case, the light tube 16 may be provided at either end of the light distribution member 10.

Other light sources may be used, for example an array of light emitting diodes. In this case, it is preferred that a diffuser is provided to diffuse the light from the point sources to give more uniform illumination of the graphics. The light emitting diodes may be controlled by suitable circuitry to control the light intensity emitted by the light emitting diodes.

As best seen from the front view of Figure 2, the light distribution panel 10, the graphics 14 and the transparent cover sheets 12 are mounted within a frame including upper and lower housings 34 and side frame members 32. As described in greater detail below, the upper and lower housings 34 are arranged to house the light tubes 16, power supplies 18 and other ancillary components, such as the transformer where required. The side frame members 32 are provided with a channel for cabling and lugs for clamping the light distribution panel 10, the graphics 14 and the transparent cover sheets 12.

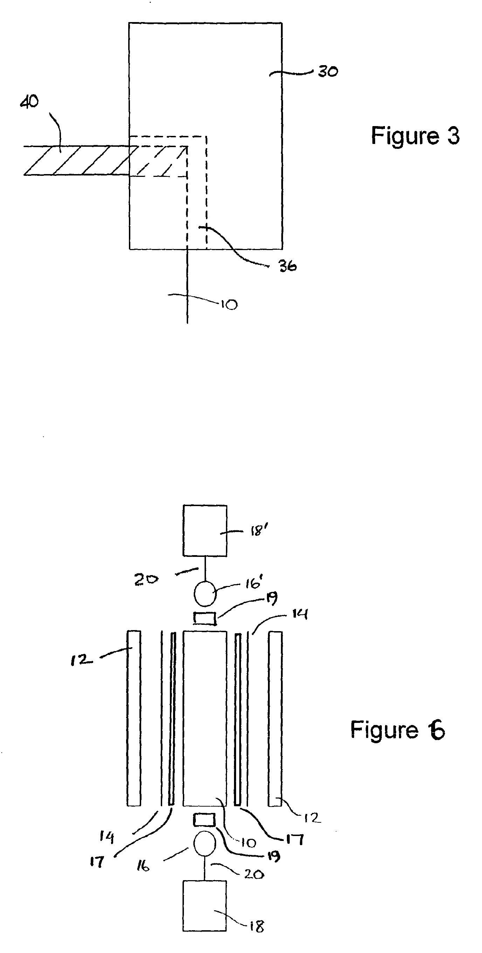

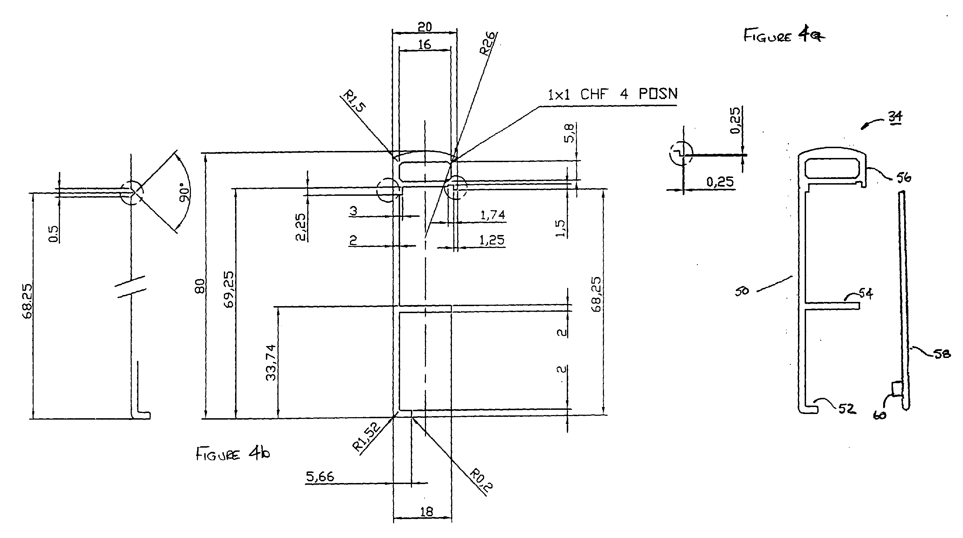

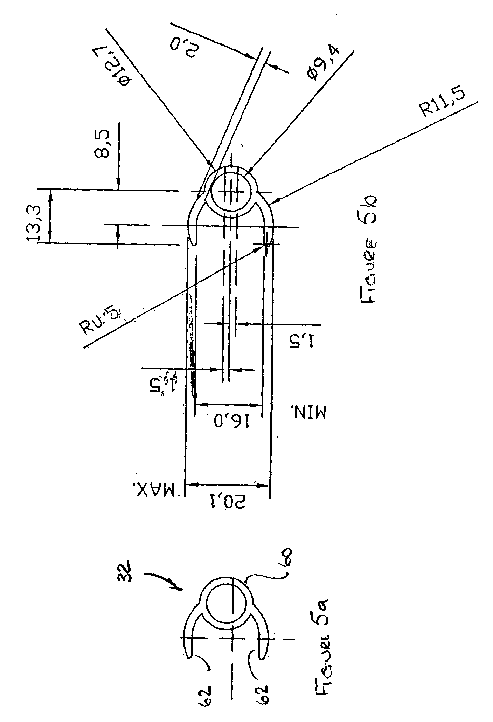

The side frame members 32 are extruded from aluminium, and extend into corner pieces 30. The side frame members 32 are secured in the corner pieces by a suitable pin or other fixing member. The corner pieces 30 are moulded from a plastics material, and are connected to the housings 34, for example by press fitting the corner pieces 30 into the housings 34. As shown in Figure 3, each of the corner pieces 30 includes a recess 36 for receiving the corners of the central light distribution member 10, thereby holding this in place within the overall frame.

Figures 4a and 4b show a cross-sectional view of the housing 34. Figure 4a shows a simple cross-section, whilst Figure 4b shows typical dimensions of the parts of the housing 34. The housing 34 is preferably extruded from a metal material, such as aluminium, which is preferred due to its lightness. However, the housing 34 may be formed from other material, such as plastics, and may be moulded. A panel 58 is provided to close the right hand side of the housing as shown in the Figures. The housing 34 includes a base 50, which in use will generally be orientated vertically at the front or the rear of the light box. Extending from the base 50 are a lip 52, a support ledge 54 and a top 56. The support ledge 54 extends substantially across the depth of the light box, and provides a support for the ballast 18, transformer and any other components associated with the power supply for the light tubes 16. As the ledge 54 extends substantially across the depth of the light box, this also acts as a barrier to prevent the components supported by the ledge 54 from being visible from the front or rear of the light box, through the graphic and transparent panels, thereby giving the light box a clean appearance. The light tubes 16 are supported on the other side of the ledge 54. The lip 52 is shorter than the ledge 54, forming an opening through which the light from the light tubes 16 may pass to the light distributing member 10. To make the most efficient use of the light available from the light tubes 16, the lower surface of the ledge 54, the inner surface of the base 50 and/or the inner surface of the front panel 58 of the housing may include reflective material to direct the light towards the light distribution member 10. As shown in Figure 4a, the panel 58 also includes a strip 60 of light blocking material, such as a foam material. In use, the strip 60 is arranged to abut against the outer surface of the light distributing member 10, thereby preventing light from the light tubes shining directly along the outer surface of the light distributing member 10. This prevents stray light passing directly through the graphic other than through the light distributing member 10 which may otherwise adversely effect the appearance of the graphic, and helps ensure a uniform distribution of light across the display area.

The top 56 of the housing 34 is designed to give structural stability to the housing. The top 56 may include openings for couplings for supporting the light box. It is preferred that these couplings include openings through which cables may pass into the housing for supplying power to the power supply components and to the light tubes 16. With this arrangement, the light box of the present invention may be hung from supporting wires from above, or may be mounted on support rods from below, as well as being mountable on a wall or on a stand.

Figures 5a and 5b show a cross-sectional view of the side frame members 32. Figure 5a shows a simple cross-section, whilst Figure 5b shows typical dimensions of the parts of the side frame member 32. The side frame member 32 is preferably extruded from a metal material, such as aluminium, which is preferred due to its lightness. However, the side frame member 32 may be formed from other material, such as plastics, and may be moulded.

The side frame member 32 includes an elongate tubular member 60, with two lugs 62 projecting from either side thereof. The size of the tubular member 60 is selected to provide an internal channel of sufficient area to allow cables to pass from one housing 34 at one end of the light box to the housing 34 at the other end of the light box. The size of the tubular member 60 is also selected to ensure that the overall diameter is suitable for the overall thickness of the light box, and in particular for the dimensions of the central light distributing member 10, and the transparent cover sheets 12. The tubular member 60 should also be formed from material of sufficient thickness to support the structure of the light box. In the preferred example shown in Figure 5b, the tube is extruded from aluminium to give a thickness of 2mm. The tube has an external diameter of between 10 and 15 mm, preferably between 12 and 14 mm and most preferably around 12.7mm. The internal diameter of the tube is preferably at least 8mm, and more preferably is around 9.4mm.

Although it is preferred that the tubular member 60 is formed as a closed tube, it is possible to form this with an elongate opening along one, for example the inner, side. However, with this arrangement, the member 60 may provide less structural stability, will not be as efficient at retaining light within the light box, and will not hide any cables from being seen through the front or rear of the light box.

The lugs 62 extend from opposite sides of the tubular portion 60. The free ends of the lugs 62 are spaced apart from each other by a distance corresponding generally to, or slightly greater than, the combined thickness of the light distributing member 10, the graphic sheet 14 and the two transparent sheets 12 to effectively clamp the members together, thereby ensuring that these are held without the risk of these falling out of the side frame member.

The lugs 62 should be of a sufficient length that they extend beyond the tubular portion 60 of the side frame member 32 to allow the free ends of the lugs to contact the members of the light box, but should not be too long to prevent removal of the members 12 as discussed below. It is therefore preferred that the lugs 62 are at least 9mm long, and more preferably at least 11mm long, but that their length is no more than 20mm and preferably no more than 15mm long. As shown in Figure 5b, the lugs 62 preferably have a length of around 13.3mm.

The overall width of the side frame members 32 is advantageous no more than around 20mm, giving the overall light box the desired, thin, appearance.

The side frame members 32 act not only to hold the members of the light box together, and to provide a channel though which cables may pass, but also act to prevent the escape of light from the side of the light box, and also hide the sides of the panel, giving an improved appearance to the light box.

To help maximise the available light, reflective portions may be provided to seek to reduce the light escaping from the light box other than through the light distribution member 10, the graphics 14 and through the transparent cover sheet 12. For example, as shown in Figure 3, the top and or bottom edges of the light distribution member 10 may include reflective strips to prevent light escaping from these portions. This is of particular advantage where the light distributing member 10 extends into the housing 34, in which case the reflective strips help ensure that all light is directed into the light distributing member 10 in portions where the member 10 is overlaid by the graphic sheets. Reflective portions may also be provided around the side edges of the transparent cover sheets 12 to prevent the escape of light from these edges.

To prevent colour bleed when the light box is used to illuminate two graphics, one on either side of the central light distributing member 10, it may be advantageous to include an opalised sheet, for example of paper or opal acrylic, between the central light distributing member 10 and the graphic or poster. This allows light distributed from the central light distributing member 10 to pass through the opalised sheet and through the graphic to illuminate this, but acts to minimise reflections from the graphic which may otherwise pass through the central light distributing member 10 and create a colour bleed visible when viewing the graphic on the opposite side. The inclusion of an opalised sheet to prevent or minimise colour bleed constitutes an independent aspect of the present invention that is useful for other light boxes.

In operation, the light box is assembled with the corner pieces 30 supporting the central light distributing member 10 as shown in Figure 3, and being attached to an upper and lower housing 34 and to two side frame members 32. The power supply components are supported by the respective ledges 54 of the housings 34, and light tubes 16 are mounted within the housings 34 to direct light onto the opposed edges of the central light distributing member 10 to illuminate this.

To display a graphic or poster, the graphic or poster 14 is laid on one face of the central light distributing member 10. The transparent cover sheet 12 is laid over the graphic 14, the edges of the transparent cover 12 being slotted under one of the lugs 62 of each of the side frame members 32. To facilitate this, the transparent cover sheet 12 may be flexed generally parallel to the edges to be located under the lugs 62, thereby reducing the effective width of the sheet 12, which is then flattened as the edges clip under the lugs 62.

Especially with large cover sheets 12, there is the risk that, after being fitted in the light box, the weight of the cover sheet 12 will cause the centre of the sheet to bow outwardly, thereby pulling the edges of the sheet 12 from under the lugs 62, such that the entire sheet 12 may fall from the light box. To avoid this, a lug may be provided on the housing 32 that is able to engage the front face of the sheet 12 to hold this in place, and to prevent the sheet 12 from bowing and thereby falling from the light box. This lug may be rotatable or otherwise moveable between a first position in which it does not contact the sheet 12, allowing the sheet to be positioned in the light box, and a second position in which it contacts and holds the sheet 12.

Figure 6 shows an alternative embodiment of the present invention. In this case, the light source comprises an array of light emitting diodes 16' controlled by suitable circuitry 18'. A diffuser 19 is provided to help diffuse the light from the array of light emitting diodes 16' to the light distribution panel 10, as previously described. The example shown also includes two opalised sheets 17 provided between each face of the light distribution panel 10 and the graphic 14.

## Claims

1. An illuminated display apparatus comprising:
a light distribution panel (10) mounted within a frame, the frame comprising a first and a second housing (34) on opposed ends of the frame joined by a first and a second frame member (32) on opposed sides of the frame;
a light source (16) arranged to illuminate an edge of the light distribution panel (10); and
a transparent cover sheet (12) arranged to be positioned over one face of the light distribution panel (10) to sandwich a graphic sheet (14) between the light distribution panel (10) and the transparent cover sheet (12), in which
the first and second frame member (32) each include lugs (62) arranged to extend over the edges of the transparent cover sheet (12) to clamp this to the light distribution panel (10).

2. An illuminated display according to Claim 1, having a thickness of less than 40mm, and more preferably of about 20mm.

3. An illuminated display according to Claim 1 or Claim 2, in which the first and/or second housings (34) support the light source (16) and power supply (18) components associated with the light source (16).

4. An illuminated display according to any one of the preceding claims, in which separate light sources (16) are associated with each of the first and second housings (34), allowing the light distribution panel (10) to be illuminated from either or both ends.

5. An illuminated display according to any one of the preceding claims, in which the light source (16) comprises one or more strip light tubes, such as fluorescent light tubes.

6. An illuminated display according to any one of Claims 1 to 4, in which the light source (16) comprises an array of light emitting diodes.

7. An illuminated display according to any one of the preceding claims, in which a diffuser (19) or other means is provided to diffuse light from the light source (16) to give substantially uniform illumination.

8. An illuminated display according to any one of the preceding claims, in which the light from the light source (16) may change colour to create a display which changes colour.

9. An illuminated display according to any one of the preceding claims, in which two transparent cover sheets (12) are provided, one on either side of the light distribution panel (10).

10. An illuminated display according to any one of the preceding claims, and including an opalised sheets (17) of material provided between the light distribution panel (10) and at least one of the graphic sheets (14).

11. A frame member (32) for use in an illuminating display apparatus according to any one of the preceding claims, the frame member including an elongate tubular body (60) and a pair of elongate lugs (62) extending from the tubular body (60), the lugs being arranged to receive and clamp the light distribution panel (10) and the at least one cover sheet (12).

12. A frame member (32) according to Claim 11, formed from metal, for example from aluminium.

13. A frame member according to Claim 11 or Claim 12, in which the tubular body (60) has an internal diameter of a size to receive cables from one end of the frame to the other.

14. A frame member according to any one of Claim 11 to 13, in which the elongate lugs (62) have a concave shape, arranged to curve towards the panels (12) of the display apparatus.

15. An illuminated display apparatus includes a light distribution panel (10), a light source (16) arranged to illuminate an edge of the light distribution panel (10), and a graphic sheet (14) provided on each side of the light distribution panel (10), in which an opalised sheet of material (17) is provided between the light distribution panel (10) and at least one of the graphic sheets (14).

16. An illuminated display apparatus according to Claim 15, in which two opalised sheets (17) are provided, one between each graphic sheet (14) and the light distribution panel (10).
